# FASCICULE DE BREVET EUROPEEN

(11) **EP 2 975 526 B1**
(45) Date de publication et mention de la délivrance du brevet: **19.09.2018**
(21) Numéro de dépôt: 15177094.8
(22) Date de dépôt: 16.07.2015
(51) Int. Cl.: G06F 11/26, G06F 11/34

(54) **PROCÉDÉ DE PRODUCTION DE PERTURBATIONS CONTRÔLÉES DE L'ACTIVITÉ D'UN DISPOSITIF DE TRAITEMENT AUTOMATISÉ PENDANT UN SCENARIO DE TEST D'UNE APPLICATION**
VERFAHREN ZUR ERZEUGUNG VON KONTROLLIERTEN STÖRUNGEN DER AKTIVITÄT EINER AUTOMATISIERTEN VERARBEITUNGSVORRICHTUNG WÄHREND DES TESTABLAUFS EINER ANWENDUNG
METHOD FOR PRODUCING CONTROLLED DISTURBANCES OF THE ACTIVITY OF AN AUTOMATED PROCESSING DEVICE DURING AN APPLICATION TESTING SCENARIO

(30) Priorité: 17.07.2014 FR 1456868
(43) Date de publication de la demande: 20.01.2016
(73) Titulaire: BULL SAS, 78340 Les Clayes sous Bois (FR)
(72) Inventeur: GERMAIN, Christophe, 38100 Grenoble (FR); BAGNARD, Natacha, 38100 Grenoble (FR); ROY, Bernard, 38140 Beaucroissant (FR)
(74) Mandataire: Cabinet Camus Lebkiri

(56) Documents cités:
- WO-A1-2007/038953
- WO-A1-2013/098500
- WO-A1-2013/145628
- US-A1- 2009 156 314
- US-A1- 2009 271 170
- US-A1- 2013 282 334

## Description

### DOMAINE TECHNIQUE DE L'INVENTION

La présente invention a pour objet Procédé de production de perturbations contrôlées de l'activité d'un dispositif de traitement automatisé pendant un scénario de test d'une application.

Le domaine de l'invention est le domaine des tests de performance d'infrastructures informatiques, et plus particulièrement la génération d'activité additionnelle pouvant être appliquée pendant un tir de charge.

On entendra par tir de charge, dans le cadre du présent document la mise en oeuvre d'un scénario de test selon des procédures métier d'une application. Un outil classiquement utilisé à une telle fin est, par exemple, JMeter.

### ETAT DE LA TECHNIQUE ANTERIEURE

Lors de campagnes de tests et ou de profilage, on utilise un kit d'injection pour effectuer des tirs de charge afin de mesurer les performances d'une chaîne applicative. Ces tests sont généralement réalisés en environnement de recette/intégration. C'est-à-dire dans un environnement contrôlé et à l'abri d'influences extérieures. Cette méthode permet de s'assurer que les performances mesurées sont bien uniquement celles du système d'information soumis aux tests de performance. Cependant, dans son contexte réel, le système d'information n'est pas isolé.
Un tel procédé est par exemple divulgué dans le document WO-A1 -2013/09850.

Les résultats des tests de performance ne sont alors pas pertinents pour décider quel doit être la configuration à utiliser dans un environnement de production ouvert.

Une solution actuelle consiste à effectuer un test de charge correspondant à un pic estimé de sollicitation de l'application. Ce test va donner une mesure de performance. A partir de cette mesure et d'un coefficient de sécurité, on peut calculer, par extrapolation, une configuration que l'on espère résistante mais sans pouvoir le garantir.

Le document US-A1-2009/0271170 divulgue la mise en place sur un dispositif applicatif à perturber d'au moins un générateur de perturbation. Dans un premier temps, un contrôleur reçoit des spécifications permettant de connaître les perturbations à réaliser ainsi qu'à quel instant. Une fois ces spécifications connues, le contrôleur émet des requêtes, chaque requête correspondant à une perturbation à mettre en oeuvre sur le serveur applicatif, ladite requête étant émise à l'instant où ladite perturbation doit être mise en oeuvre. Les agents sont déployés indépendamment des spécifications et le planning des perturbations est géré par le contrôleur et non pas par les serveurs applicatifs eux-mêmes.

### EXPOSE DE L'INVENTION

L'invention vise à remédier à tout ou partie des inconvénients de l'état de la technique identifiés ci-dessus, et notamment à proposer des moyens pour permettre de garantir la résistance d'une configuration.

La présente invention permet de simuler automatiquement une activité sur les composants des serveurs de la chaîne testée. Cette simulation d'activité est générée selon 4 axes permettant de stresser différents éléments du système :
- CPU
- Lecture/Écriture disque
- Lecture/Écriture réseau
- Mémoire

Pour chaque serveur d'une chaîne applicative, il est possible de paramétrer au travers d'une configuration des axes de stress avec pour chacun d'eux un taux appliqué, le moment de démarrage et la durée.

On est ainsi capable de produire une activité autre que celle résultant de l'application elle-même et d'obtenir des résultats de tests beaucoup plus proches d'une exploitation réelle.

Dans ce dessein, un aspect de l'invention se rapporte à un procédé de production de perturbations contrôlées de l'activité d'un dispositif de traitement automatisé pendant un scénario de test d'une application mise en oeuvre par le dispositif de traitement automatisé comportant les étapes suivantes :
- Acquisition d'une configuration définissant au moins une perturbation par :
   - Un identifiant du dispositif à perturber,
   - Une date de début de la perturbation,
   - Une durée pour la perturbation,
   - Un type pour la perturbation,
   - Un niveau de perturbation,
- Mise en place d'au moins un générateur de perturbation selon la configuration de la au moins une perturbation
- Lancement du scénario de test, la perturbation étant exécutée par le dispositif à perturber selon une planification gérée par ledit dispositif durant ledit scénario de test.

Outre les caractéristiques principales qui viennent d'être mentionnées dans le paragraphe précédent, le procédé/dispositif selon l'invention peut présenter une ou plusieurs caractéristiques complémentaires parmi les suivantes, considérées individuellement ou selon les combinaisons techniquement possibles:
- le type d'une perturbation est parmi la liste formé d'au moins :
   - Charge processeur,
   - Lecture/Ecriture disque,
   - Lecture/Ecriture réseau,
   - Utilisation Mémoire ;
- selon le type de la perturbation, il comporte une étape de calibration du générateur de perturbation ;
- une date de début de perturbation est relative à une date de début du scénario de test ;
- le générateur est un processus qui connaît sa date de démarrage, a accès à la date courante et est contrôlé par une structure de boucle dépendant de la comparaison de la différence entre la date courante et la date de démarrage avec la durée de la perturbation ;
- la boucle comporte des instructions pour :
   - Perturber le dispositif selon le type de perturbation,
   - Inhiber temporairement les instructions pour perturber afin de respecter le niveau de perturbation requis ;
- la mise en place du générateur sur un dispositif comporte au moins les étapes suivantes :
   - Copie d'au moins un fichier exécutable sur le dispositif,
   - Planification, sur le dispositif, de l'exécution du au moins un fichier exécutable copié

L'invention se rapporte également à un dispositif de stockage numérique comportant un fichier correspondant à des codes instructions mettant en oeuvre un procédé selon une combinaison des caractéristiques des précédentes.

L'invention se rapporte également à un dispositif mettant en oeuvre un procédé selon une combinaison des caractéristiques des précédentes.

### BREVE DESCRIPTION DES FIGURES

D'autres caractéristiques et avantages de l'invention ressortiront à la lecture de la description qui suit, en référence aux figures annexées, qui illustrent :
- la figure 1, une illustration de moyens permettant la mise en oeuvre du procédé objet de l'invention ;
- la figure 2, une illustration d'étapes du procédé selon l'invention.

Pour plus de clarté, les éléments identiques ou similaires sont repérés par des signes de référence identiques sur l'ensemble des figures.

L'invention sera mieux comprise par la lecture de la description qui suit et à l'examen des figures qui l'accompagnent. Celles-ci sont présentées à titre indicatif et nullement limitatif de l'invention.

### DESCRIPTION DETAILLEE D'UN MODE DE REALISATION

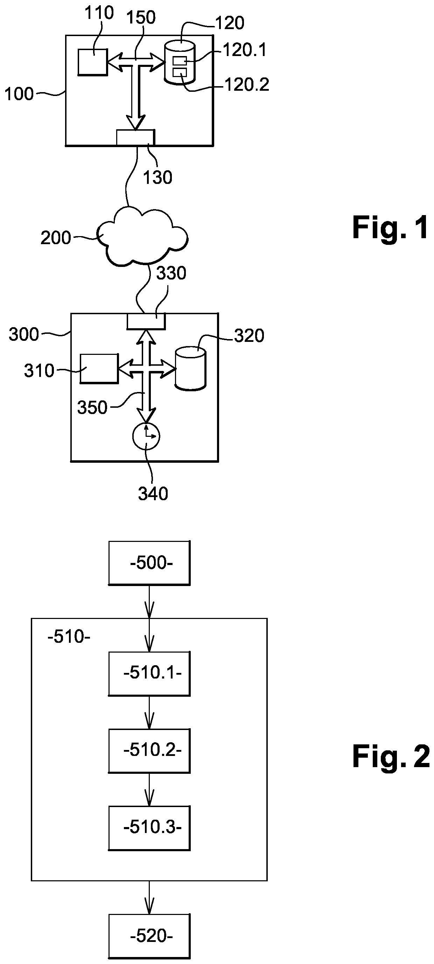

La figure 1 montre un dispositif serveur de tests ou serveur 100 de tests comportant :
- Un microprocesseur 110,
- Des moyens 120 de stockage, typiquement un disque dur qu'il soit local ou distant,
- Une interface 130 de communication, par exemple une interface réseau de type Ethernet, FiberChannel, InfiniBand...

Le microprocesseur du dispositif serveur, les moyens de stockage du dispositif serveur et l'interface de communication du dispositif serveur sont interconnectés par un bus 150.

Lorsque l'on prête une action à un dispositif celle-ci est en fait effectuée par un microprocesseur du dispositif commandé par des codes instructions enregistrés dans une mémoire du dispositif. Si l'on prête une action à une application, celle-ci est en fait effectuée par un microprocesseur du dispositif dans une mémoire duquel les codes instructions correspondant à l'application sont enregistrés. Lorsqu'un dispositif émet ou reçoit un message, ce message est émis ou reçu par une interface de communication du dispositif.

La figure 1 montre que le serveur 100 de tests est connecté à un réseau 200.

La figure 1 montre un serveur 300 applicatif comportant :
- un microprocesseur 310,
- des moyens 320 de stockage,
- une interface 330 de communication,
- une horloge 340 interne.

Le microprocesseur du serveur applicatif, les moyens de stockage du serveur applicatif, l'interface de communication du serveur applicatif, l'horloge interne du serveur applicatif sont interconnectés par un bus 350.

Le serveur de tests et le serveur d'application sont connectés via le réseau 200.

La figure 1 montre que les moyens de stockage du serveur de tests comportent une zone 120.1 de configuration de perturbations. La zone 120.1 de configuration de perturbations est aussi appelée un fichier de configuration de perturbations ou tout simplement une configuration de perturbations. Un fichier de configuration est un fichier, ou un ensemble de fichiers, qui permet d'associer plusieurs données ou champs. Cette association de champs est aussi appelée un enregistrement de perturbation. Un tel fichier de configuration de perturbations est, par exemple, un fichier XML, un fichier CSV, un fichier INI, un fichier JSON.... Un fichier de configurations comporte zéro, un ou plusieurs enregistrements de configuration. Dans une variante le fichier de configuration de perturbations est enregistré dans une base de données.

Un enregistrement de perturbation comporte au moins les champs suivants :
- un champ identifiant du dispositif à perturber : par exemple une adresse réseau, ou un nom résolvable en adresse réseau ;
- un champ date de début de perturbation, il s'agit :
   - d'une date absolue évaluée relativement à une horloge interne d'un dispositif produisant la perturbation ;
   - d'une date relative au début d'un scénario de test ;
- un champ durée de perturbation : per exemple un nombre de secondes ;
- un champ type de perturbation, par exemple un code prédéterminé permettant de désigner une perturbation parmi :
   - charge processeur;
   - lecture/écriture disque ;
   - lecture/écriture réseau ;
   - utilisation mémoire ;
- un champ niveau de perturbation, l'interprétation de ce champ dépendant du type de perturbation, il s'agit par exemple :
   - d'un pourcentage de charge maximale pour le processeur ou pour la mémoire ;
   - d'un débit pour les lectures écriture ;
   - d'une valeur absolue pour la mémoire.

Les dates de début, durée et niveau de perturbation sont aussi appelés des paramètres de perturbation.

La figure 1 montre aussi que les moyens de stockage du serveur de tests comportent une zone 120.2 code de perturbation comportant des codes instructions correspondant à des codes instructions pour la mise en oeuvre de perturbations. Ces codes instructions sont soit des codes objets, par exemple pour les perturbations liées à la mémoire, soit des scripts dits « shell » ou scripts shell. Dans une variante la zone 120.2 code de perturbation comporte des codes instructions compilables, la compilation étant réalisée au moment de la mise en place de perturbations. La zone 120.2 de code de perturbation est elle-même divisée en sous-zone, chacune des sous-zones correspondant au moins à un type de perturbation. Dans une variante les codes de perturbation sont paramétrables pour prendre en compte des paramètres de perturbation.

La figure 2 montre une étape 500 d'acquisition d'une configuration. Dans l'étape 500, le serveur de tests lit le contenu de la zone 120.1 de configuration de perturbations. Dans la mise en oeuvre décrite la zone 120.1 de configuration de perturbations correspond à un fichier. Dans des variantes la zone 120.1 de configuration de perturbations peut être acquise par une ou plusieurs requêtes émise vers un système de gestion de base de données.

La lecture de la zone 120.1 de configuration de perturbations permet au serveur de test d'obtenir une liste des perturbations à mettre place, ainsi que les caractéristiques de ces perturbations. Ces caractéristiques sont au moins celles qui ont été décrites lors de la description de la zone 120.1 de configuration de perturbations.

Une fois la configuration acquise par le serveur de test il passe à une étape 510 de mise en place des perturbations sur les serveurs cibles. L'étape 510 est mise en oeuvre pour chaque perturbation décrite dans la configuration acquise à l'étape 500 d'acquisition.

La figure 2 montre que l'étape 510 de mise en place d'une perturbation comporte :
- une étape 510.1 de configuration de la perturbation : dans cette étape le serveur de test utilise le type de la perturbation pour extraire de la zone 120.2 code de perturbations les codes instructions correspondant au type de la perturbation. Il est possible de paramétrer à cette étape la durée de la perturbation, par exemple, en modifiant les codes instructions de la perturbation en fonction de la durée de la perturbation ;
- une étape 510.2 de déploiement de la perturbation : dans cette étape le serveur de tests copie sur le serveur d'application identifié par le champ identifiant de dispositif à perturber des codes instructions de la perturbation ;
- une étape 510.3 de planification de la perturbation : cette étape se fait par l'émission d'une commande de planification (typiquement une commande « at »), dont les paramètres sont la date de début de perturbation et une ligne de commande. La ligne de commande comporte un fichier exécutable et éventuellement des paramètres. Le fichier exécutable est celui qui a été déployé. Dans une variante les paramètres permettent, par exemple, de fixer la durée de la perturbation.

Les étapes de déploiement et de planification sont exécutées, par exemple, depuis le serveur de test via un shell distant tel que telnet ou ssh.

Il est clair pour l'homme du métier que les perturbations sont déployées par un serveur de tests sur des serveurs applicatifs puis exécutées par les serveurs applicatifs selon une planification gérée par les serveurs applicatifs.

Si les dates de début de perturbation sont relatives au début du scénario de test, alors, au moment du lancement du scénario, le serveur de tests émet des commandes de mise à zéro des horloges internes des dispositifs à perturber.

Dans la pratique toutes les horloges des serveurs sont synchronisées via un même serveur NTP. Il est donc aisé, connaissant la date de début du scénario, de fixer des dates pour les perturbations. Dans cette configuration les dates sont soit absolues, soit relatives ; dans ce cas, la quantité relative est ajoutée à la date de début de test lors de l'étape de planification. Cette synchronisation facilite la délégation de la gestion de la panification aux serveurs applicatifs par le serveur de tests.

L'étape de mise en place des perturbations est suivie d'une étape 520 de lancement du scénario de test. Un tel lancement est, par exemple, une exécution de l'application JMeter.

Dans la mesure où les perturbations ont été planifiées lors de l'étape de planification, ces perturbations vont s'exécuter en parallèle du scénario de tests, selon la planification.

Une perturbation est assimilable à une boucle dont le pseudo code est le suivant :

```
 sdt = maintenant();
 tant que maintenant() - sdt < durée
      perturber()
```

On voit avec ce code que la perturbation ne dure que « durée », ou durée est la durée de la perturbation. « perturber() » est une fonction qui dépend du type de la perturbation.

Par exemple pour une perturbation d'activité processeur est par exemple un script shell correspondant au pseudo code suivant :

```
 sdt = maintenant()
 tant que maintenant() - sdt < duree
      calcul()
      dormir(x)
```

Ou :
- « calcul() » est une fonction dont le but est d'occuper le processeur, par exemple le calcul d'une tangente ;
- « dormir(x) » est une fonction qui ne sollicite pas le microprocesseur pendant une durée x, x étant un paramètre de la perturbation déterminée en fonction du niveau de perturbation souhaité. La durée est calculée avant le commencement du tir et garantie la perturbation du CPU avec le taux d'occupation souhaité

Dans le cas de la perturbation microprocesseur il peut être utile d'effectuer un calibrage, notamment pour déterminer la durée d'attente. Pour déterminer qu'elle doit être la valeur du paramètre pour atteindre le niveau souhaité de perturbation. Cela est fait en effectuant, pour une valeur de paramètre connue une mesure de la perturbation hors scénario de tests. Il est alors possible, via une interpolation, de déterminer la valeur du paramètre à utiliser pour atteindre le niveau de perturbation souhaité. Dans une variante un calibrage se fait par itération, c'est-à-dire en faisant varier le paramètre jusqu'à ce que la mesure d'activité corresponde au niveau de perturbation souhaité.

Un calibrage est effectué après le déploiement, mais avant le lancement du scénario de tests.

Pour une perturbation lecture/écriture le pseudo code serait le suivant :

```
 sdt = maintenant()
 total = 0
 tant que maintenant() - sdt < duree
      si total / (maintenant() - sdt) < niveau
            écrire(fichier)
            total = total + taille(fichier)
```

On compare donc une écriture effective à un niveau cible et on fait en sorte de ne pas dépasser durablement ce niveau cible qui est le niveau de perturbation souhaité. « écrire » dépend du type de la perturbation :
- disque : une instruction « copy »
- réseau : une instruction « netcat ».

«si total / (maintenant() - sdt) < niveau» est une commande d'inhibition. Dans une variante cette instruction comporte une clause « sinon dormir(x) » qui permet de diminuer l'empreinte processeur.

Ces instructions, ou commandes, « copy » et « netcat » sont telles qu'elles ont une faible empreinte processeur, c'est-à-dire que leur mise en oeuvre ne peut pas être considérée comme une perturbation microprocesseur.

Une perturbation mémoire simple correspond par exemple au pseudo code suivant :

```
 sdt = maintenant()
 m = allocation(niveau)
 tant que maintenant() - sdt < duree
      dormir(x)
 libérer(m)
```

Dans ce cas :
- alloction() : est une instruction d'allocation de mémoire, par exemple « malloc »,
- « libérer() » est une instruction de libération de mémoire, par exemple « free ».

Cette variante permet d'occuper la mémoire de manière statique, c'est-à-dire sans déplacement de la mémoire.

Dans une autre variante on utilise le code suivant qui permet de plus de simuler l'utilisation de la mémoire telle qu'un programme l'utiliserait. Cette vaiante requiert un paramètre supplémentaire qui est soit une valeur par défaut, soit fourni par l'enregistrement de perturbation correspondant. Cet enregistrement comportera alors un champ supplémentaire, ce champ étant un débit. Le pseudo code est alors :

```
 sdt = maintenant()
 total = 0
 source = tableau[]
 tant que maintenant() - sdt < duree
      m = allocation(niveau)
      tant que total < niveau
            si total / (maintenant() - sdt) < débit
                 ecrire(source, m)
            sinon
                 dormir()
           total = total + taille(source)
      libérer(m)
```

Dans cette variante :
- « source » : est par exemple une chaîne de caractère, un tableau d'un type de données scalaire, une zone mémoire allouée dynamiquement... la liste n'est pas exhaustive.
- « écrire() » : est une instruction pour écrire dans une zone mémoire, par exemple en copiant une zone mémoire source vers une zone mémoire destination comme « memcopy » ou « memmove ».

Une autre variante serait :

```
 sdt = maintenant()
 total = 0
 source = tableau[]
 tant que maintenant() - sdt < duree
      si total < débit * (maintenant() - sdt)
            m = allocation(niveau)
            ecrire(source, m)
            libérer(m)
           total = total + taille(source)
      sinon
           dormir()
```

Ces variantes permettent d'effectuer plusieurs cycles allocation/dé allocation pendant la durée de la perturbation et donc d'être plus proche du comportement d'un programme tiers.

## Revendications

1. Procédé de production de perturbations contrôlées de l'activité d'un dispositif de traitement automatisé pendant un scénario de test d'une application mise en oeuvre par le dispositif de traitement automatisé comportant les étapes suivantes :
- Acquisition (500) d'une configuration définissant au moins une perturbation par :
- Un identifiant du dispositif à perturber,
- Une date de début de la perturbation,
- Une durée pour la perturbation,
- Un type pour la perturbation,
- Un niveau de perturbation,
- Mise en place (510), sur le dispositif identifié à perturber, d'au moins un générateur de perturbation selon la configuration de la au moins une perturbation
- Lancement (520) du scénario de test, la perturbation étant exécutée par le dispositif à perturber selon une planification gérée par ledit dispositif durant ledit scénario de test.

2. Procédé de production de perturbations contrôlées selon la revendication 1, **caractérisé en ce que** le type d'une perturbation est parmi la liste formée d'au moins :
- Charge processeur,
- Lecture/Ecriture disque,
- Lecture/Ecriture réseau,
- Utilisation Mémoire.

3. Procédé de production de perturbation selon l'une des revendications précédentes **caractérisé en ce que**, selon le type de la perturbation, il comporte une étape de calibration du générateur de perturbation.

4. Procédé selon l'une des revendications précédentes, **caractérisé en ce que** une date de début de perturbation est relative à une date de début du scénario de test.

5. Procédé de production de perturbation selon l'une des revendications précédentes **caractérisé en ce que** le générateur est un processus qui connaît sa date de démarrage, a accès à la date courante et est contrôlé par une structure de boucle dépendant de la comparaison de la différence entre la date courante et la date de démarrage avec la durée de la perturbation.

6. Procédé de production de perturbation selon la revendication 5, **caractérisé en ce que** la boucle comporte des instructions pour :
- Perturber le dispositif selon le type de perturbation,
- Inhiber temporairement les instructions pour perturber afin de respecter le niveau de perturbation requis.

7. Procédé de production de perturbation selon l'une des revendications précédentes, **caractérisé en ce que** la mise en place du générateur sur un dispositif comporte au moins les étapes suivantes :
- Copie (510.2) d'au moins un fichier exécutable sur le dispositif,
- Planification (510.3), sur le dispositif, de l'exécution du au moins un fichier exécutable copié.

8. Dispositif de stockage numérique comportant un fichier correspondant à des codes instructions mettant en oeuvre le procédé selon l'une des revendications précédentes.

9. Dispositif mettant en oeuvre le procédé selon l'une des revendications 1 à 7.

## Patentansprüche

1. Produktionsverfahren von kontrollierten Störungen der Aktivität einer automatisierten Verarbeitungsvorrichtung während eines Testszenarios während einer Anwendung, die durch die automatisierte Verarbeitungsvorrichtung umgesetzt ist, umfassend die folgenden Schritte:
- Erwerb (500) einer Konfiguration, die wenigstens eine Störung definiert durch:
∘ Eine Kennung der zu störenden Vorrichtung;
∘ Ein Anfangsdatum der Störung;
∘ Eine Dauer für die Störung;
∘ Einen Typ für die Störung;
∘ Ein Störungsniveau,
- Einsetzen (50) wenigstens eines Störungsgenerators gemäß der Konfiguration der wenigstens einen Störung in der identifizierten, zu störenden Vorrichtung,
- Starten (520) des Testszenarios, wobei die Störung durch die zu störende Vorrichtung gemäß einer Planung ausgeführt ist, die durch die genannte Vorrichtung während des genannten Testszenarios verwaltet wird.

2. Produktionsverfahren von kontrollierten Störungen gemäß Anspruch 1, **dadurch gekennzeichnet, dass** der Typ einer Störung aus der Liste stammt, die wenigstens gebildet wird aus:
- Prozessorcharge,
- Lese- / Schreibplatte,
- Lese- / Schreibnetz,
- Verwendung Speicher.

3. Produktionsverfahren von Störungen gemäß einem der voranstehenden Ansprüche, **dadurch gekennzeichnet, dass** es, in Abhängigkeit von dem Typ der Störung, einen Kalibrierungsschritt des Störungsgenerators umfasst.

4. Verfahren gemäß einem der voranstehenden Ansprüche, **dadurch gekennzeichnet, dass** ein Anfangsdatum der Störung relativ zu einem Anfangsdatum des Testszenarios ist.

5. Produktionsverfahren von Störungen gemäß einem der voranstehenden Ansprüche, **dadurch gekennzeichnet, dass** der Generator ein Prozess ist, der sein Startdatum kennt, Zugriff auf das aktuelle Datum hat und durch eine Schleifenstruktur kontrolliert ist, die von dem Vergleich der Differenz zwischen dem aktuellen Datum und dem Startdatum mit der Dauer der Störung abhängt.

6. Produktionsverfahren von Störungen gemäß Anspruch 5, **dadurch gekennzeichnet, dass** die Schleife Anweisungen umfasst, um:
- Die Vorrichtung gemäß dem Störungstyp zu stören,
- Die Anweisungen zur Störung vorübergehend zu inhibieren, um das erforderliche Störungsniveau zu beachten.

7. Produktionsverfahren von Störungen gemäß einem der voranstehenden Ansprüche, **dadurch gekennzeichnet, dass** das Einsetzen des Generators in einer Vorrichtung wenigstens die folgenden Schritte umfasst:
- Kopie (510.2) wenigstens einer auf der Vorrichtung ausführbaren Datei,
- Planung (510.3) der Ausführung der wenigstens einen kopierten, ausführbaren Datei in der Vorrichtung.

8. Digitale Speichervorrichtung, umfassend eine Datei, die Anweisungscodes entspricht, die das Verfahren gemäß einem der voranstehenden Ansprüche umsetzt.

9. Vorrichtung, die das Verfahren gemäß einem der Ansprüche 1 bis 7 umsetzt.

## Claims

1. A method for producing controlled disturbances of the activity of an automated processing device during a test scenario of an application implemented by the automated processing device including the following steps of:
- acquiring (500) a configuration defining at least one disturbance by:
- an identifier of the device to be disturbed,
- a start time of the disturbance,
- a duration for the disturbance,
- a type for the disturbance,
- a disturbance level,
- placing (510), on the identified device to be disturbed, at least one disturbance generator according to the configuration of the at least one disturbance
- initiating (520) the test scenario, the disturbance being executed by the device to be disturbed according to a schedule managed by said device during said test scenario.

2. The method for producing controlled disturbances according to claim 1, **characterised in that** the type of a disturbance is among the list formed by at least:
- processor load,
- disk read/write,
- network read/write,
- memory use.

3. The method for producing disturbances according to one of the preceding claims, **characterised in that**, according to the type of the disturbance, it includes a step of calibrating the disturbance generator.

4. The method according to one of the preceding claims, **characterised in that** a start date of disturbance is related to a start date of the test scenario.

5. The method for producing disturbances according to one of the preceding claims, **characterised in that** the generator is a process which knows its start date, has access to the current date and is controlled by a loop structure depending on the comparison of the difference between the current date and the start date with the disturbance duration.

6. The method for producing disturbances according to claim 5, **characterised in that** the loop includes instructions for:
- disturbing the device according to the disturbance type,
- temporarily inhibiting the instructions to disturb in order to meet the required disturbance level.

7. The method for producing disturbances according to one of the preceding claims, **characterised in that** placing the generator on a device includes at least the following steps of:
- copying (510.2) at least one file executable on the device,
- scheduling (510.3), on the device, the execution of the at least one executable copied file.

8. A digital storage device including a file corresponding to instruction codes implementing the method according to one of the preceding claims.

9. The device implementing the method according to one of claims 1 to 7.
